# EUROPEAN PATENT SPECIFICATION

(11) **EP 1 890 892 B1**
(45) Date of publication and mention of the grant of the patent: **04.05.2011**
(21) Application number: 05749211.8
(22) Date of filing: 30.05.2005
(51) Int. Cl.: B60C 15/04

(54) **PNEUMATIC TIRE WITH COMPOSITE BEAD CORE**
LUFTREIFEN MIT VERBUNDWULSTKERN
PNEU AVEC TRINGLE INTEGRE

(43) Date of publication of application: 27.02.2008
(73) Proprietor: PIRELLI TYRE S.p.A., 20126 Milano (IT)
(72) Inventor: DAGHINI, Guido Pirelli Tyre S.p.A., I-20126 Milan (IT); ALMONACIL, Celine Pirelli Tyre S.p.A., I-20126 Milan (IT); BIZZI, Stefano Pirelli Tyre S.p.A., I-20126 Milan (IT); SUSA, Alessandro Pirelli Tyre S.p.A., I-20126 Milan (IT)
(74) Representative: Colombo, Stefano Paolo
(86) International application number: PCT/EP2005/052446
(87) International publication number: WO 2006/128494

(56) References cited:
- US-A- 3 942 574
- US-A- 5 307 853
- PATENT ABSTRACTS OF JAPAN vol. 1995, no. 07, 31 August 1995 (1995-08-31) -& JP 07 096720 A (TOYO TIRE & RUBBER CO LTD), 11 April 1995 (1995-04-11)
- PATENT ABSTRACTS OF JAPAN vol. 2000, no. 11, 3 January 2001 (2001-01-03) & JP 2000 225817 A (BRIDGESTONE CORP), 15 August 2000 (2000-08-15)

## Description

### BACKGROUND OF THE INVENTION

### FIELD OF THE INVENTION

The present invention relates to a tire for a motor vehicle which is provided with an improved bead core.

In particular, the present invention relates to a tire for a motor vehicle which is provided with a bead core suitable for ensuring an improved anchoring thereof to a wheel rim on which the tire is mounted.

### DESCRIPTION OF THE PRIOR ART

A tire generally comprises: a carcass structure comprising at least one carcass ply; a tread band in a position radially external to the carcass structure; a belt structure interposed between the carcass structure and the tread band. A tire generally further comprises a pair of sidewalls applied to the carcass structure in axially opposite positions. The ends of the at least one carcass ply are folded back or secured to two annular reinforcing elements, i.e. the so-called "bead cores", and the tire region which comprises the bead core is known as "tire bead".

Generally, in a position radially external to the bead core, the tire bead further comprises an elastomeric insert, conventionally called "bead filling" or "bead apex", which has a substantially triangular cross-section and extends radially outwardly from the respective bead core.

A tire bead, and particularly the bead core thereof, is generally requested to perform a plurality of functions.

Firstly, a bead core performs the function of anchoring the tire carcass cords in the tire bead, the carcass cords being subjected to longitudinal stresses proportional to the tire inflation pressure and to the tire curvature ratio. The carcass cords are further subjected to longitudinal and torsional stresses which are due to the centrifugal force, the lateral thrusts and/or the torques acting on the tire during travelling thereof.

Furthermore, a bead core performs the function of anchoring the tire to a respective wheel rim thereby ensuring, in case of a tubeless tire, a sealing effect between the tire and the wheel rim, the latter being provided in correspondence of the bead mounting position and generally comprising two substantially conical coaxial surfaces which act as the supporting base for the tire beads. Said surfaces generally terminate in a flange, radially projecting outwardly, that supports the axially outer surface of the bead and against which the latter abuts by virtue of the tire inflation pressure. Proper positioning of the bead into its seat is ensured by the conical shape of the bead seat in cooperation with the bead core.

The bead core is requested to withstand relevant deformations that arise during the fitting operation of the tire on a respective wheel rim. In fact, the diameter of the radially internal annular surface of the bead core is smaller than the radially external diameter of the rim flange and is chosen so that, once the tire bead has been positioned in the respective bead seat of the rim, after passing over the flange, it is pushed by the pressure of the tire inflating fluid along the diverging surface of the bead seat against the axially internal surface of the flange. Generally, the fitting of a tire on a respective rim starts with the deformation (ovalisation) of the tire bead so that a portion thereof is able to pass over the flange. Successively, the rest of the tire bead is caused to completely pass over the flange such that the bead is positioned in the closest bead seat. Then the bead is pushed axially towards the opposite bead seat so as to cause it to fall into the central groove of the rim. In this way, once the bead is located inside the abovementioned central groove, the equatorial plane of the tire may be inclined with respect to the equatorial plane of the rim so as to allow also the opposite bead to pass over the flange and be positioned in the corresponding bead seat, by means of ovalisation thereof (and hence of ovalisation of the respective bead core). Finally, the tire is inflated so that both the beads come into abutment against the axially internal surfaces of the flange. Owing to the rigidity of the bead core, the fitting/removal operations of the tire onto/from the rim require the use of levers with which it is possible to apply a force sufficient to deform the bead core, modifying the configuration from a substantially circular one to an oval one, so as to allow, as mentioned above, the bead to pass over the flange. However, the use of levers acting on the elongated elements forming the bead core may result in locally exceeding the elastic strain limits of said elements which is particularly undesirable since it may have a negative effect on the structural strength properties of the bead core during the travel of the tire and, in some cases, may also result in breakage of one or more of the elongated elements of the tire bead core.

Usually bead cores are formed by steel cords. However, alternative materials have been suggested in the art.

US-5,307,853, considered as being the closest prior art to the subject-matter of claim 1, discloses a tire bead including steel cords and aromatic polyamide cords, the steel cords being placed inside a cross section of the tire bead and the aromatic polyamide cords being placed on the outside of the bead cross section.

US-5,198,050 discloses a pneumatic tire having an annular band for reinforcing a bead portion and a sidewall portion of the pneumatic tire. In one embodiment, the annular band comprises a plurality of filaments, the latter being made of a material preferably taken from the group consisting of: steel, fiberglass, carbon, polyesters, and most preferably aramid.

US-4,823,857 discloses an annular bead member for a tire comprising at least two radially superposed layers each of which comprises a composite of fibers embedded in a non-metallic matrix material. The fibers are preferably selected from the group consisting of: glass fibers, aramid fibers, carbon fibers, polyamide fibers and metallic fibers.

US-4,320,791 discloses a pneumatic tire comprising, as a structural component thereof, a bead member comprising a slender bead element made of an organic or inorganic fiber other than metallic material and having a high modulus of at least 10⁵ kg/cm². As substitutes for conventional steel wires, high-modulus organic fibers, such as aramid fiber, and high-modulus inorganic fibers, such as carbon fiber, are used for slender bead elements or cords having high specific strength and high specific modulus.

JP 6286426 discloses a pneumatic radial tire having bead reinforcing members composed of fiber-resin complex material cords formed by embedding in a resin fiber cords formed of aromatic polyamide fiber cords.

JP 4133807 discloses a tire whose bead part is reinforced with a bead core manufactured by annularly winding a nonmetal-fiber-material-made element line.

JP 57066007 discloses a method wherein a complex material for a tire bead is made of a bead fiber - having a predetermined modulus of elasticity - and a matrix phase having a predetermined hardening modulus of elasticity. The bead fiber is made of an organic substance - the modulus of elasticity of which is above 10⁵ kg/cm² - or of an inorganic non-metallic high modulus fiber.

Besides the above functions, the bead core is requested to ensure the transmission of torques (traction torques and braking torques) from the rim to the tire during the vehicle accelerations and decelerations. Therefore the anchoring of the tire to the rim is requested to be suitable so as to prevent the tire from sliding with respect to the mounting rim. This aspect, which is important for any vehicle (passenger cars, trucks, motorbikes), is particularly critical in the case of high performance (HP) and ultra high performance (UHP) tires, these tires being designed for high-powered cars which are generally involved in high operating speeds (e g. higher than 200 km/h) and/or extreme driving conditions wherein swift and relevant accelerations/decelerations are generally caused to occur.

The Applicant has perceived the need of increasing the anchoring of the tire bead to the rim so that the torques, which are generated by the vehicle (e.g. by the engine or the brakes thereof), can be transmitted from the rim to the tire without causing any substantial sliding of the tire on the rim.

The Applicant has noticed that, nowadays, a pneumatic tire which is firmly anchored to the rim and which is able to receive said relevant torques is even more requested since the presence in the car market of high-powered vehicles has considerably increased.

In particular, the Applicant has perceived the need of increasing the bead radial force, i.e. the radial force which is responsible for anchoring the tire bead to the rim, meanwhile ensuring that the plurality of further functions mentioned above are not negatively affected.

More in particular, the Applicant has perceived the need of providing the tire with a bead core which is able to increase the hooping force of the tire bead on the rim while ensuring the necessary strength for withstanding the stresses applied thereto and while ensuring the necessary dimensional precision on the inner periphery of the bead portion so as to ensure a good fitting of the tire to the rim.

In details, the Applicant has perceived the need of providing a bead core which improves the anchoring of the tire on the rim without negatively affecting the tire bead mechanical resistance (structural integrity of the tire bead) and thus the safeness thereof during use, as well as the tire uniformity (e.g. the regularity of the tire geometrical dimensions, the rigidity of the tire in the radial direction and the uniform distribution of the tire masses along the circumferential direction).

Moreover, the Applicant has perceived the need of providing a tire whose bead core structure can contribute in decreasing the overall tire weight, fact which remarkably influences the tire performances such as the rolling resistance, especially in case high-powered vehicles are considered.

### SUMMARY OF THE INVENTION

The Applicant has found that the hooping force of the tire beads on the rim can be suitably increased - without negatively affecting the mechanical properties of the tire beads and the overall tire uniformity - by providing the tire with bead cores which include metal elongated elements and carbon fiber elongated elements.

According to the present invention, it is provided a tire for a motor vehicle, said tire comprising: a carcass structure comprising at least one carcass ply, said carcass structure comprising a crown portion and two axially opposite side portions terminating in beads for mounting the tire on a rim; a tread band, and a belt structure interposed between said carcass structure and said tread band, wherein each bead includes a bead core, said bead core comprising: at least one first elongated element comprising at least one metal wire, and at least one second elongated element comprising at least one carbon fiber.

According to the present invention, the term "elongated element" is used to indicate a single wire (i.e. a monofilament) or a cord which is obtained by stranding at least two single wires or a yam.

In the present description and claims, the term "carbon fiber elongated element" is used to indicate a continuous multifilament yarn of carbon fibers. Preferably, said continuous multifilament yarn of carbon fibers is impregnated by a resin.

Preferably, the ratio (in percentage) between the amount of metal material and the amount of carbon fibers present in the bead core of the present invention is comprised from about 20 to about 80. More preferably, said ratio is comprised from about 40 to about 60. The ranges mentioned above are particularly preferred since they can ensure a satisfactory compromise among hooping force of the tire bead on the rim, high tensile strength requested to the bead core and bead core weight.

Further features and advantages will become more apparent from the detailed description of preferred but non-exclusive embodiments of a tire in accordance with the present invention. The present description should be taken with reference to the accompanying drawings, given by way of non limiting example.

### BRIEF DESCRIPTION OF THE DRAWINGS

In the drawings:
- Figures 1a and 1b show a first embodiment of a bead core strip element and a bead core respectively according to the present invention;
- Figures 2a and 2b show a second embodiment of a bead core strip element and a bead core respectively according to the present invention;
- Figures 3a and 3b show a third embodiment of a bead core strip element and a bead core respectively according to the present invention;
- Figures 4a and 4b show a fourth embodiment of a bead core strip element and a bead core respectively according to the present invention;
- Figures 5a and 5b show a fifth embodiment of bead core strip elements and a bead core respectively according to the present invention;
- Figure 6a shows a schematic cross section of a hybrid cord which is used in a bead core in accordance with the present invention;
- Figures 6b and 6c show a sixth embodiment of a bead core strip element and a bead core respectively according to the present invention;
- Figure 7 shows a seventh embodiment of bead core according to the present invention;
- Figures 8a and 8b show an annular insert and a bead core respectively according to a eight embodiment of the present invention;
- Figures 9a and 9b show an annular insert and a bead core respectively according to a ninth embodiment of the present invention;
- Figures 10a and 10b show an annular insert and a bead core respectively according to a tenth embodiment of the present invention;
- Figure 11 is a schematic side view showing the convolutions of a spiral arrangement of the bead core strip element of Figure 1a, and
- Figure 12 is a schematic partial cross-sectional view of a tire incorporating a bead core according to the present invention.

### BEST MODE FOR CARRYING OUT THE INVENTION

A typical bead core structure is the so-called "Alderfer" structure which has a configuration of the type "m x n", where "m" indicates the number of axially adjacent cords (obtained by stranding at least one pair of wires) and "n" indicates the number of radially superimposed layers of said cords. This structure is obtained by using a rubberized strip element comprising a predefined number of - textile or metallic - cords and by spirally winding (coiling) said rubberized strip element so as to form a desired number of layers arranged radially superimposed one to the other. This constructional method allows the formation of cross-sectional contours of the bead core which are of a substantially quadrangular type. Typical examples of Alderfer structures are 4x4, 5x5 and 4x5 structures.

A further conventional bead core structure is the so-called "single wire bead core". This is formed from a single rubberized cord which is wound spirally so as to form a first layer of axially adjacent turns (coils); then, in a position radially external to said first layer, the same cord is further coiled so as to form a second layer in a position radially external to the first layer, and so on, so as to form several radially superimposed layers. Therefore, by varying the number of turns in each layer, it is possible to obtain cross-sectional contours of the bead core with different geometrical forms, for example a hexagonal shaped cross-section. A regular hexagonal bead core may be formed, for example, by means of 19 windings arranged in the configuration: 3-4-5-4-3. This series of numbers indicates that the individual rubberized cord is coiled so as to form firstly three turns axially adjacent to each other to obtain a first layer; then four turns axially adjacent to each other are provided in succession so as to form a second layer radially superimposed on the first layer, followed by five turns, axially adjacent to each other, so as to form a third layer radially superimposed on the second layer, then four turns axially adjacent to each other so as to form a fourth layer radially superimposed on the third layer and finally three turns axially adjacent to each other so as to form a fifth layer radially superimposed on the fourth layer. Further configurations can be, for instance, 4-5-4-3 and 5-6-5-4.

A further conventional bead core structure is obtained by using a plurality of rubberized cords, each individual cord being radially coiled onto itself so as to form a column (i.e. a series) of radially superimposed wound turns (coils). Several columns of turns, possibly with a different vertical extension (namely different number of wound turns radially superimposed on each other), axially adjacent to each other, thus form the abovementioned bead core. Preferably, said wires have predetermined cross sections (e.g. a substantially hexagonal cross section) so that the wires of axially adjacent coils can be coupled together to form an assembly (i.e. the bead core) that is constituted by equal and distinct elements (modular elements) and that is provided with a compact cross section, i.e. the latter does not comprise hollow spaces or interferences and has an area corresponding to the sum of the section areas of said distinct elements.

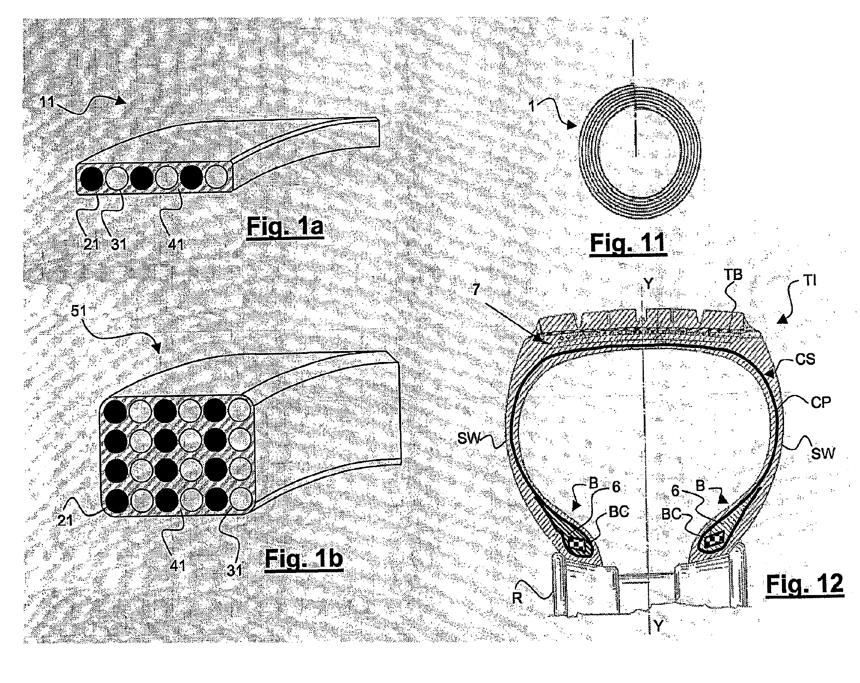

Figure 12 shows a partial cross-sectional view of a tire TI which comprises: a carcass structure CS; a tread band TB located on the crown of said carcass structure; two axially spaced sidewalls SW terminating in tire beads B. For securing the tire to a corresponding mounting rim R, each tire bead B comprises a bead core 5 and a corresponding bead apex 6 located in a position radially external to the bead core 5.

The carcass structure CS comprises one or more carcass plies CP (only one being shown in Figure 1) which are associated to the bead cores 5. In accordance with the embodiment shown in Figure 1, the carcass ply CP is associated with the respective bead cores 5 by turning up the carcass ply ends around the bead cores 5. Alternatively (said embodiment being not shown), the carcass ply CP has its ends integrally associated with the bead cores 5, as disclosed, for instance, in European patent EP-928,680 - in the name of the same Applicant - according to which a green tire is manufactured by consecutively producing and assembling together on a toroidal support the tire structural elements. In details, the tire is manufactured by axially overlapping and/or radially superimposing turns of a strip-like element on the toroidal support, said strip-like element being a strip of an elastomeric material only, or a strip of elastomeric material embedding reinforcing elements thereinto, typically textile or metal cords, or a rubberized metal wire or cord. According to said process, the toroidal support is moved, preferably by a robotized system, between a plurality of work stations in each of which, through automated sequences, a particular building step of the tire is carried out.

Tire TI further comprises a belt structure 7 interposed between the carcass structure CS and the tread band TB, said belt structure preferably comprising two belt layers, usually including metal cords that are parallel to each other in each layer and crossing over those of the adjacent layers. The metal cords in each layer are symmetrically inclined with respect to the tire equatorial plane Y-Y. Preferably, in a radially outermost position, the belt structure also comprises a third belt layer which is provided with rubberized cords, preferably textile cords, that are oriented circumferentially, i.e. with a disposition at substantially zero degrees with respect to the tire equatorial plane Y-Y.

### First embodiment

Figures 1a, 1b and 11 show a first embodiment of the present invention. In particular, Figure 1a shows a portion of a bead core strip element 11. The strip element 11 comprises a plurality of axially adjacent elongated elements 21, 31 which are embedded in an elastomeric material 41. As schematically represented in Figure 11, a bead core 51 (partially shown in Figure 1b) is obtained by spirally winding (coiling) the strip element 11 to form a plurality of layers, the latter being radially superimposed one to the other to form the bead core 51. In Figure 11 the wound strip element to obtain a plurality of radially superimposed layers has been indicated with reference number 1.

The term "adjacent", as used in the present description and claims, may or may not imply contact but always implies absence of anything of the same kind between. Two elongated elements are considered to be adjacent one to the other either if they are in contact (at least partially) or if they are not in contact (for instance when rubber is provided in between). Two elongated elements are not considered to be adjacent one to the other if there is a third elongated element there between.

The bead core 51 shown in Figure 1 b is a 6X4 "Alderfer" bead core, wherein digit "6" is the number of axially adjacent elongated elements 21, 31 which are present in each strip element 11, while digit "4" is the number of radially superimposed layers (coils) of the strip element 11.

The 6X4 bead core arrangement shown in Figure 1 b is an example of the bead core according to the present invention. It is apparent that a plurality of different bead core arrangements (i.e. a bead core having a different number of layers as well as a different number of elongated elements present in each strip element) can be provided in accordance with the present invention.

According to the embodiment shown in Figure 1 a, the strip element 11 is formed of six axially adjacent elongated elements 21, 31. In particular, the strip element 11 is formed of first metal elongated elements 31 and of second elongated elements 21 which are made of carbon fibers.

Preferably, the first elongated elements 31 are made of steel or an alloy thereof.

Preferably, the first elongated elements 31 are obtained by stranding at least two metal wires. Alternatively, the first elongated elements 31 consist of a metal monofilament, i.e. of a single metal wire.

According to the embodiment shown in Figure 1a, axially adjacent elongated elements 21, 31 are arranged in an alternate configuration wherein a first elongated element 31 is interposed between two second elongated elements 21 so as to obtain a 1:1 sequence.

Therefore, the bead core 51 of Figure 1 b comprises first series of the first elongated elements 31 and second series of the second elongated elements 21.

According to the present invention, the term "series" is used to indicate a column of radially superimposed coils of a single elongated element.

Therefore, the bead core 51 comprises at least one first series of the first elongated element 31 and at least one second series of the second elongated element 21. In detail, the bead core 51 comprises three first series of the first elongated elements 31 and three second series of the second elongated elements 21, said first and second series being arranged in an alternate configuration. More in detail, according to this first embodiment, each first series is axially adjacent to at least one second series.

The Applicant has found that the tire integrity, and thus the safeness derivable therefrom, can be advantageously improved by arranging the metal elongated elements of the bead core in correspondence of the rim flange. This means that it is particularly advantageous to provide a strip element wherein the metal elongated element(s) is (are) positioned at the strip element axial edge which, when integrated in the bead core, faces the rim flange. In detail, the Applicant has found that it is preferable to provide a bead core whose metal elongated elements are located in proximity of the rim flange and the elongated elements made of carbon fibers are located in proximity of the inner surface of the tire since the bead core portion that is positioned in correspondence of the rim flange is requested to withstand relevant mechanical stresses during travelling of the tire and during the mounting/demounting operations of the tire onto/from the rim.

According to the present invention, the second elongated elements 21 are made of carbon fibers.

Generally, carbon fibers are obtained by a production process which includes the step of dipping the carbon fibers into a thermosetting resin.

Generally, said production process involves a plurality of steps which include: dipping the fibers into an impregnation bath containing an epoxy resin; impregnating the fibers with a solution containing a mixture of resorcinol-formaldehyde resin and a rubber latex (this mixture being commonly denoted by the expression "resorcinol-formaldehyde latex RFL)"); drying the RFL impregnation; and twisting the fibers. The fiber twisting may take place even before the impregnation steps. The latex used may be: vinylpyridine/styrene-butadiene (VP/SBR), styrene-butadiene (SBR); latex of natural rubber (NR); carboxylated and hydrogenated acrylonitrile-butadiene (X-HNBR); hydrogenated acrylonitrile (HNBR); acrylonitrile (NBR), ethylenepropylene-diene monomer (EPDM), chlorosulfonated polyethylene (CSM); or a mixture thereof.

Optionally, the cabled or twisted fibers can be impregnated with an adhesive in a solvent medium for obtaining an additional layer covering the fibers. Preferably, the adhesive in a solvent medium is a blend of polymers, possibly halogenated polymers, organic compounds, such as isocyanates, and mineral fillers, such as carbon black. The additional layer, forming a ring around the fibers, is particularly advantageous for ensuring good adhesion to certain types of rubber, such as acrylonitrile (NBR), hydrogenated acrylonitrile (HNBR), carboxylated hydrogenated acrylonitrile (X-HNBR), vulcanizable hydrogenated acrylonitrile (ZSC), chlorosulfonated polyethylene (CSM), alkylated chlorosulfonated polyethylene (ACSM) and ethylenepropylene-diene monomer (EPDM).

Suitable carbon fibers are those manufactured by Toray Industries Inc. and sold under the trade names Toray T700 and Toray T400, and by Toho Tenax and sold under the trade name Tenax UTS 5631.

In Table 1 are shown some significant properties of two carbon fiber yarns which are suitable for being used as second elongated elements in a tire bead of the present invention.

**Table 1**

| Property | Carbon fiber yarn 1 | Carbon fiber yarn 2 |
|---|---|---|
| Overall linear density (mass per unit length) | 400 tex* | 800 tex |
| Number of filaments | 6,000 | 12,000 |
| Diameter** | 0.8 mm | 1.04 mm |
| Tensile strength** | 650 N | 950 N |
| Load at break | 430 N | 1080 N |
| Weight | 0.6 g/m | 1.1 g/m |
| Tensile modulus*** | 101 GPa | 101 GPa |

| | | |
|---|---|---|
| * Tex measure unit is the weight in grams corresponding to 1,000 m of fiber; ** Measured at 80 Z tpm (80 turns per meter in the Z twisting direction); *** Measured between an extension value of 0.8% and the break point of the given carbon fiber yarn; | | |

It can be noted that carbon fiber yarns have a flexural fatigue resistance higher than organic fiber cords (e.g. aramid cords) known in the art.

Preferably, the impregnated carbon fiber cords which are used in the tire bead core of the present invention have an ultimate tensile strain at failure comprised from about 1.6% and 2.3%. More preferably, said ultimate tensile strain at failure is comprised from about 1.8% and 2.1%.

Furthermore, the Applicant has noted that impregnation of carbon fibers with a suitable RFL component guarantees a good load distribution over the filaments (i.e. the carbon fibers), reduces filament fretting and also guarantees a good adhesion to rubber compounds. Therefore, the impregnated carbon fibers can provide a better adhesion to the rubber compounds with respect to organic fiber cords, and, moreover, can provide an elongated element which is more compact than an elongated element made of organic fiber cords, fact which reduces the presence of air among the fibers and thus reduces the risk of corrosion phenomena inside the tire bead core.

Preferably, the resin content in the carbon fiber yarn of the bead core of the present invention is comprised from about 20% by weight to about 50% by weight. More preferably, said resin content is comprised from about 25% by weight to about 40% by weight.

As mentioned above, according to the present invention the first elongated elements 31 are made of metal. Preferably, said first elongated elements 31 are made of steel or an alloy thereof. The steel can be a standard NT (normal tensile) steel whose breaking strength ranges between about 2,600 N/mm² (or 2,600 MPa) and about 3,200 N/mm², a HT (High Tensile) steel whose breaking strength ranges between about 3,000 N/mm² and about 3,600 N/mm², a SHT (Super High Tensile) steel whose breaking strength ranges between about 3,300 N/mm² and about 3,900 N/mm², a UHT (Ultra High Tensile) steel whose breaking strength ranges between about 3,600 N/mm² and about 4,200 N/mm². Said breaking strength values depend in particular on the quantity of carbon contained in the steel.

Preferably, the first elongated elements 31 are monofilaments, i.e. single wires.

### Second embodiment

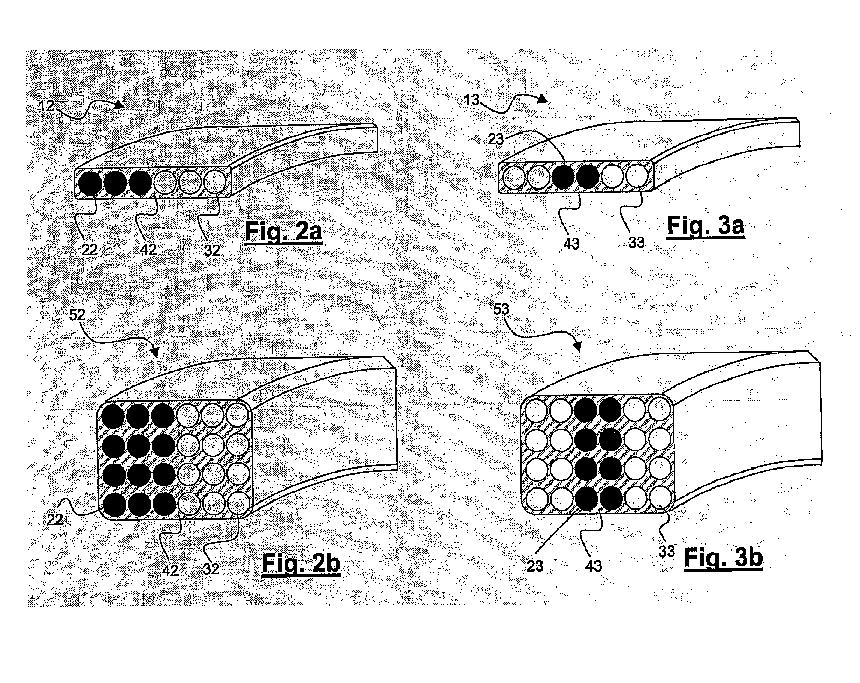

Figures 2a and 2b show a portion of a bead core strip element 12 and a bead core 52, respectively, according to a second embodiment of the present invention.

The bead core strip element 12 shown in Figure 2a comprises a plurality of axially adjacent elongated elements 22, 32 which are embedded in an elastomeric material 42. In details, the bead core strip element 12 comprises three second elongated elements 22 made of carbon fibers and three first metal elongated elements 32.

As schematically represented in Figure 11 and as already described with reference to the first embodiment of the present invention, the bead core 52 (partially shown in Figure 2b) is obtained by spirally winding (coiling) the strip element 12 to form a plurality of layers radially superimposed to each other. In Figure 11 the wound strip element to obtain a plurality of radially superimposed layers has been indicated with reference number 1.

The bead core 52 shown in Figure 2b is a 6X4 "Alderfer" bead core already described with reference to the first embodiment of the present invention.

According to the second embodiment shown in Figure 2a, the strip element 12 is formed of six axially adjacent elongated elements 22, 32. In particular, differently from the first embodiment described above wherein the first and second elongated elements are arranged in alternate configuration, according to the embodiment shown in Figure 2a the first elongated elements 32 are axially adjacent and positioned at a first axial end of the strip element 12 while the second elongated elements 22 are axially adjacent and positioned at a second axial end of the strip element 12, the second axial end being opposite to the first axial end of said strip element.

Therefore, according to this second embodiment, the bead core 52 is provided with first elongated elements 32 that form a portion of the bead core and with second elongated elements 22 that form the remaining portion of the bead core.

The bead core 52 of Figure 2b comprises at least one first series of the first elongated elements 32 and at least one second series of the second elongated elements 22. In detail, the bead core 52 comprises three first series of the first elongated elements 32 and three second series of the second elongated elements 22, wherein the three first series are axially adjacent to form the axially outer portion of the bead core while the three second series are axially adjacent to form the axially inner portion of the bead core.

Preferably, the first metal elongated elements 32 form the axially outer portion of the bead core 52, i.e. the bead core portion which is close to the rim flange.

Preferably, the second elongated elements 22 made of carbon fibers form the axially inner portion of the bead core 52, i.e. the bead core portion which is close to the inner surface of the tire and thus to the cylindrical central groove of the rim.

Preferably, the elongated elements 22 and 32 of this embodiment have the same characteristics of the elongated elements 21 and 31 of the first embodiment, respectively.

### Third embodiment

Figures 3a and 3b show a portion of a bead core strip element 13 and a bead core 53, respectively, according to a third embodiment of the present invention.

The bead core strip element 13 shown in Figure 3a comprises a plurality of axially adjacent elongated elements 23, 33 which are embedded in an elastomeric material 43. In details, the bead core strip element 13 comprises two second elongated elements 23 made of carbon fibers and four first metal elongated elements 33.

As schematically represented in Figure 11 and as already described with reference to the first embodiment of the present invention, the bead core 53 (partially shown in Figure 3b) is obtained by spirally winding (coiling) the strip element 13 to form a plurality of layers radially superimposed to each other. In Figure 11 the wound strip element to obtain a plurality of radially superimposed layers has been indicated with reference number 1.

The bead core 53 shown in Figure 3b is a 6X4 "Alderfer" bead core already described with reference to the first embodiment of the present invention.

According to the third embodiment shown in Figure 3a, the strip element 13 is formed of six axially adjacent elongated elements 23, 33. Similarly to the first embodiment described above, Figure 3a shows an alternate sequence of first and second elongated elements wherein the alternate unit is formed of two elongated elements of the same type. In detail, according to this embodiment, the strip element 13 is formed of two first elongated elements 33 that are positioned at the axial ends of the strip element 13, while two second elongated elements 23 are positioned in the centre of the strip element 13, i.e. between the two units of the first elongated elements 33.

Therefore, according to this third embodiment, the bead core 53 is provided with first elongated elements 33 that form the axially inner and outer portions of the bead core and with second elongated elements 23 that form the central portion of the bead core.

Preferably, the elongated elements 23 and 33 of this embodiment have the same characteristics of the elongated elements 21 and 31 of the first embodiment, respectively.

### Fourth embodiment

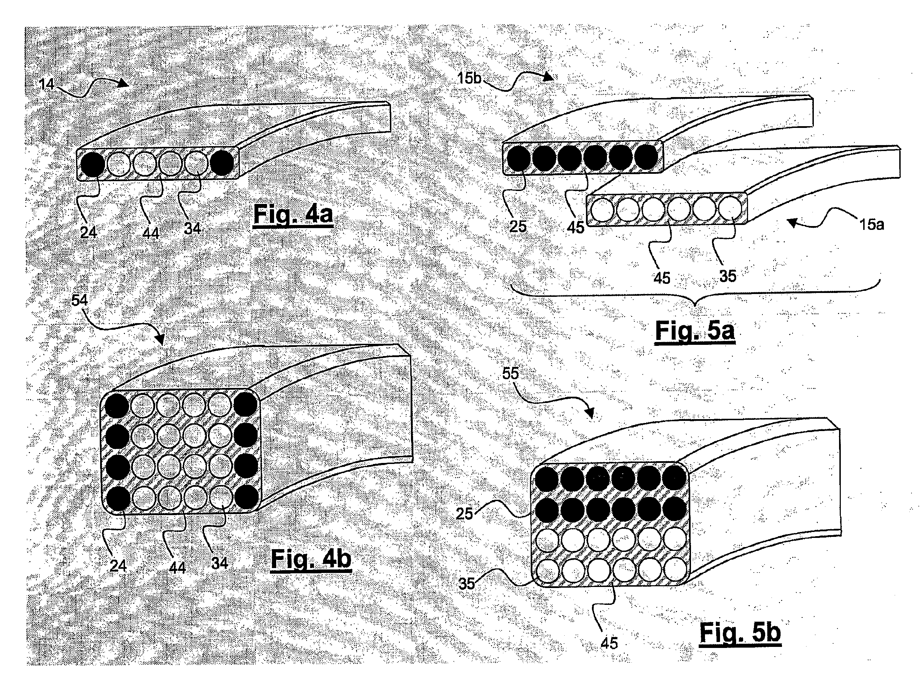

Figures 4a and 4b show a portion of a bead core strip element 14 and a bead core 54, respectively, according to a fourth embodiment of the present invention.

The bead core strip element 14 shown in Figure 4a comprises a plurality of axially adjacent elongated elements 24, 34 which are embedded in an elastomeric material 44. In details, the bead core strip element 14 comprises two second elongated elements 24 made of carbon fibers and four first metal elongated elements 34.

As schematically represented in Figure 11 and as already described with reference to the first embodiment of the present invention, the bead core 54 (partially shown in Figure 4b) is obtained by spirally winding (coiling) the strip element 14 to form a plurality of layers radially superimposed to each other. In Figure 11 the wound strip element to obtain a plurality of radially superimposed layers has been indicated with reference number 1.

The bead core 54 shown in Figure 4b is a 6X4 "Alderfer" bead core already described with reference to the first embodiment of the present invention.

According to the fourth embodiment shown in Figure 4a, the strip element 14 is formed of six axially adjacent elongated elements 24, 34. In particular, according to said embodiment the second elongated elements 24 are positioned at the axial ends of the strip element 14 while the first elongated elements 34, which are axially adjacent to each other, form the central portion of the strip element 14.

Therefore, according to this fourth embodiment, the bead core 54 is provided with second elongated elements 24 that form the axially inner and outer portions of the bead core and with first elongated elements 34 that form the central portion of the bead core.

Preferably, the elongated elements 24 and 34 of this embodiment have the same characteristics of the elongated elements 21 and 31 of the first embodiment, respectively.

### Fifth embodiment

Figures 5a and 5b show a fifth embodiment of the present invention according to which the bead core 55 is obtained by using two bead core strip elements 15a, 15b. In detail, the first bead core strip element 15a comprises only first metal elongated elements 35 while the second bead core strip element 15b comprises only second elongated elements 25 made of carbon fibers.

As schematically represented in Figure 11 and as already described with reference to the first embodiment of the present invention, the bead core 55 (partially shown in Figure 5b) is obtained by spirally winding (coiling) the strip elements 15a, 15b to form a plurality of layers radially superimposed to each other. In detail, the first strip element 15a is spirally wound (as shown in Figure 11) to form a desired number of layers (two layers in Figure 5b) which are radially superimposed one to the other. Successively, and similarly to the winding of the first strip element 15a, also the second strip element 15b is spirally wound to form a desired number of layers (two layers in Figure 5b), said layers of the second strip element 15b being radially superimposed to the layers of the first strip element 15a. The last layer (i.e. the radially outer layer) of the first strip element 15a is mechanically associated, e.g. by butt-splicing, to the first layer (i.e. the radially outer layer) of the second strip element 15b.

The bead core 55 shown in Figure 5b is a 6X4 "Alderfer" bead core already described with reference to the first embodiment of the present invention.

Therefore, according to this fifth embodiment, the bead core 55 is provided with first elongated elements 35 that form the radially inner portion of the bead core and with second elongated elements 25 that form the radially outer portion of the bead core.

Alternatively (this embodiment being not shown), the bead core 55 is provided with second elongated elements 25 that form the radially inner portion of the bead core and with first elongated elements 35 that form the radially outer portion of the bead core

Preferably, the elongated elements 25 and 35 of this embodiment have the same characteristics of the elongated elements 21 and 31 of the first embodiment, respectively.

### Sixth embodiment

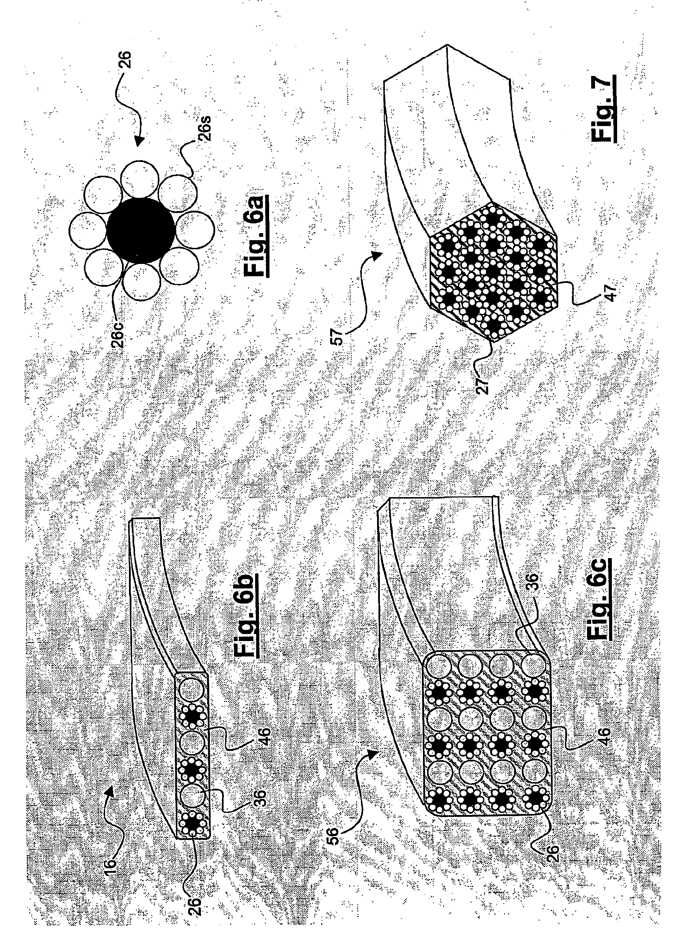

Figures 6a, 6b and 6c show a sixth embodiment of a bead core according to the present invention. In particular, Figure 6b shows a portion of a bead core strip element 16 which is used for producing the bead core 56 partially shown in Figure 6c.

As indicated in Figure 6b, the strip element 16 comprises six axially adjacent elongated elements 26, 36 which are embedded in an elastomeric material 46. In detail, the strip element 16 comprises three first elongated elements 36 and three further elongated elements 26 which are axially arranged in an alternate configuration wherein a first elongated element 36 is interposed between two further elongated elements 26 so as to obtain a 1:1 sequence.

According to this embodiment, the first elongated element 36 is made of metal. Preferably, the first elongated element 36 is made of steel or an alloy thereof.

According to this embodiment, the further elongated element 26 is a cord which comprises at least one first metal elongated element 26s and at least one second elongated element 26c which is made of carbon fibers, the at least one first metal elongated element 26s being stranded together with the at least one second elongated element 26c.

As shown in Figure 6a, preferably the further elongated element 26 comprises a second elongated element 26c that is surrounded by a crown of first metal elongated elements 26s. In other words, the further elongated element 26 is obtained by stranding a plurality of first metal elongated elements 26s around a second elongated element 26c, the latter representing the cord core.

Preferably, the first elongated element 26s is made of metal. Preferably, the first elongated element 26s is made of steel or an alloy thereof.

Preferably, the diameter of the cord 26 is comprised from about 0.8 mm and about 2.5 mm. More preferably, the diameter of the cord 26 is comprised from about 1.5 mm and about 2.0 mm.

Preferably, the number of the first elongated elements 26s, which are stranded around the elongated element 26c, is comprised between 3 and 8.

Preferably, the twisting pitch of the first elongated elements 26s is comprised between 12 mm and 22 mm.

Alternatively (this embodiment being not shown), the further elongated element 26 comprises a first metal elongated element which is surrounded by a crown of second elongated elements. In other words, the further elongated element 26 is obtained by stranding a plurality of second elongated elements around a first elongated element, the latter being the cord core.

As schematically represented in Figure 11 and as already described with reference to the first embodiment of the present invention, the bead core 56 (partially shown in Figure 6c) is obtained by spirally winding (coiling) the strip element 16 to form a plurality of layers radially superimposed to each other. In Figure 11 the wound strip element to obtain a plurality of radially superimposed layers has been indicated with reference number 1.

The bead core 56 shown in Figure 6c is a 6X4 "Alderfer" bead core already described with reference to the first embodiment of the present invention.

### Seventh embodiment

Figure 7 shows a further embodiment of a bead core according to the present invention. In detail, the bead core 57 is obtained by spirally winding a single rubberized elongated element 27.

According to this embodiment, the single elongated element 27, which is used for obtaining the bead core 57, is that shown in Figure 6a (element 26) and already described with reference to the sixth embodiment.

In detail, the bead core 57 is obtained by spirally winding the single elongated element 27 (which is embedded in an elastomeric material 47) so as to form a first layer of axially adjacent turns (coils); then, in a position radially external to said first layer, the same elongated element is further coiled so as to form a second layer in a position radially external to the first layer, and so on, so as to form several radially superimposed layers. Therefore, by varying the number of turns in each layer, it is possible to obtain cross-sectional contours of the bead core with different geometrical forms. For example, it is possible to obtain a bead core with a hexagonal shaped cross-section as shown in Figure 7.

Figure 7 shows a regular hexagonal bead core which is formed by 19 windings arranged in the configuration: 3-4-5-4-3. This series of numbers indicates that the single rubberized elongated element is coiled so as to form: i) firstly three turns axially adjacent to each other to form a first layer; ii) a second layer consisting of four turns axially adjacent to each other, the second layer being radially superimposed to the first layer; iii) a third layer consisting of five turns axially adjacent to each other, said third layer being radially superimposed to the second layer; iv) a fourth layer consisting of four turns axially adjacent to each other, said fourth layer being radially superimposed to the third layer; v) a fifth layer consisting of three turns axially adjacent to each other, said fifth layer being radially superimposed to the fourth layer. The first layer is the radially inner one and the fifth layer is the radially outer one of the bead core 57.

### Eighth embodiment

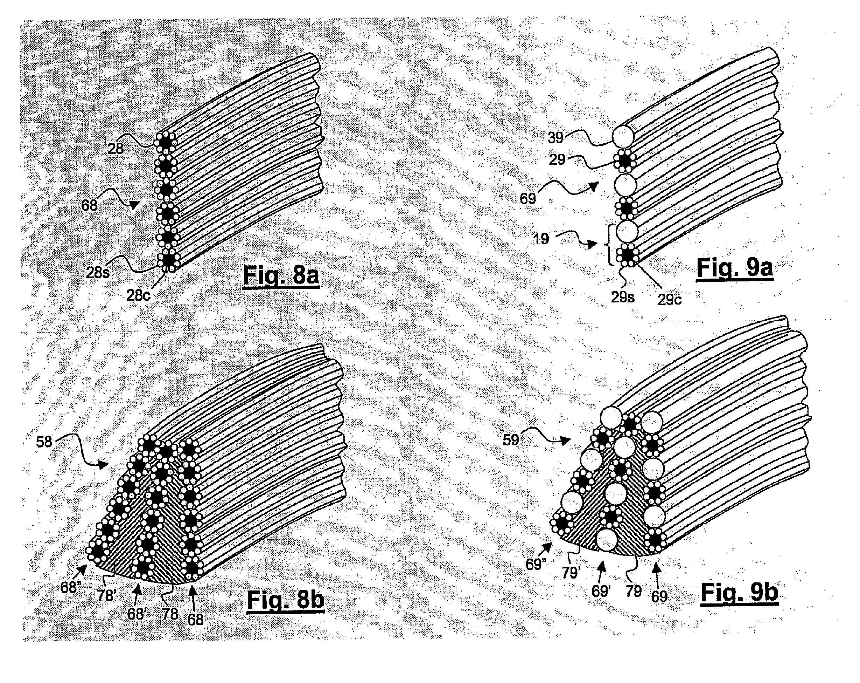

Figures 8a and 8b show, respectively, an annular insert 68 and a bead core 58, said bead core comprising two or more annular inserts 68.

In detail, the bead core 58 is described, for instance, in document EP-928,680 mentioned above according to which a tire bead comprises an annular structure which includes at least one annular insert, the latter being substantially in the form of a circle ring concentric with the geometric axis of rotation of a toroidal support on which the tire is manufactured and located close to a corresponding inner circumferential edge of a tire first carcass ply. According to this document, the annular insert is made of at least one elongated element which is wound up to form a plurality of substantially concentric coils. Generally, combined with a first annular insert is a second annular insert substantially extending in the form of a respective circle ring and coaxially disposed in side by side relationship with the first annular insert. Interposed between the first and second annular inserts is at least one filling body made of elastomeric material. Moreover, a third annular insert can be combined with the second annular insert by interposing a further filling body between the second and the third annular inserts.

According to the embodiment shown in Figure 8a, the annular insert 68 is obtained by spirally winding an elongated element 28 which forms a plurality of substantially concentric coils.

In detail, the elongated element 28, which is used for obtaining the annular insert 68, corresponds to the elongated element 26 of Figure 6a described above. In particular, the elongated element 28 is a cord which comprises at least one second elongated element 28c made of carbon fibers and at least one first metal elongated element 28s. More particularly, the elongated element 28 comprises a second elongated element 28c which is surrounded by a plurality of first metal elongated element 28s which are stranded with said second elongated element 28c.

Alternatively (this embodiment being not shown), the elongated element 28 comprises a first metal elongated element which is surrounded by a crown of second elongated elements. In other words, the elongated element 28 is obtained by stranding a plurality of second elongated elements around a first elongated element, the latter being the cord core.

Preferably, the bead core 58 is formed of more than one annular insert 68. According to the embodiment shown in Figure 8b, the annular insert 68 is associated to a second annular insert 68', a filling body 78 being interposed therebetween.

Preferably, the second annular insert 68' is identical to the first annular insert 68, i.e. the second annular insert is made of the elongated element 28 described above. Alternatively (this embodiment being not shown), the second annular insert 68' can be obtained by spirally winding a rubberized metal elongated element (e.g. the first metal elongated element 31 described with reference to the first embodiment). Alternatively (this embodiment being not shown), the second annular insert 68' can be obtained by spirally winding a rubberized elongated element made of carbon fibers (e.g. the second elongated element 21 described with reference to the first embodiment).

Preferably, the second annular insert 68' is associated to a third annular insert 68", a second filling body 78' being interposed therebetween. The third annular insert 68" is identical to the first annular insert 68, i.e. the third annular insert is made of the elongated element 28 described above. Alternatively (this embodiment being not shown), the third annular insert 68" can be obtained by spirally winding a rubberized metal elongated element (e.g. the first metal elongated element 31 described with reference to the first embodiment). Alternatively (this embodiment being not shown), the third annular insert 68" can be obtained by spirally winding a rubberized elongated element made of carbon fibers (e.g. the second elongated element 21 described with reference to the first embodiment).

The filling bodies are preferably made of an elastomeric material having a hardness included between 70° and 92° Shore A.

### Ninth embodiment

Figures 9a and 9b show, respectively, an annular insert 69 and a bead core 59, said bead core comprising two or more annular inserts 69.

As described with reference to the eighth embodiment, the bead core 59 can be obtained as disclosed, for instance, in document EP-928,680 in the name of the same Applicant.

According to the embodiment shown in Figure 9a, the annular insert 69 is obtained by spirally winding a strip element 19 which comprises an elongated element 39 and a further elongated element 29, the winding of said strip 19 forming a plurality of substantially concentric coils which define the annular insert 69.

According to this embodiment, the further elongated element 29 corresponds to the elongated element 26 of Figure 6a described above. In particular, the further elongated element 29 is a cord which comprises at least one second elongated element 29c made of carbon fibers and at least one first metal elongated element 29s. More particularly, the further elongated element 29 comprises a second elongated element 29c which is surrounded by a plurality of first metal elongated element 29s which are stranded with said second elongated element 28c.

Alternatively (this embodiment being not shown), the further elongated element 29 comprises a first metal elongated element which is surrounded by a crown of second elongated elements. In other words, the further elongated element 29 is obtained by stranding a plurality of second elongated elements around a first elongated element, the latter being the cord core.

According to this embodiment, the elongated element 39 is preferably made of metal. Preferably, said metal material is steel or an alloy thereof.

Alternatively (this embodiment being not shown), the elongated element 39 is made of carbon fibers.

Preferably the bead core 59 comprises more than one annular insert 69. According to the embodiment shown in Figure 9b, the annular insert 69 is associated to a second annular insert 69', a filling body 79 being interposed therebetween.

Preferably, the second annular insert 69' is identical to the first annular insert 69, i.e. the second annular insert is obtained by spirally winding the strip element 19 described above. Alternatively (this embodiment being not shown), the second annular insert 69' can be obtained by spirally winding a rubberized metal elongated element (e.g. the first metal elongated element 31 described with reference to the first embodiment). Alternatively (this embodiment being not shown), the second annular insert 69' can be obtained by spirally winding a rubberized elongated element made of carbon fibers (e.g. the second elongated element 21 described with reference to the first embodiment).

Preferably, the second annular insert 69' is associated to a third annular insert 69", a second filling body 79' being interposed therebetween. Preferably, the third annular insert 69" is identical to the first annular insert 69. Alternatively (this embodiment being not shown), the second annular insert 69" can be obtained by spirally winding a rubberized metal elongated element (e.g. the first metal elongated element 31 described with reference to the first embodiment). Alternatively (this embodiment being not shown), the second annular insert 69" can be obtained by spirally winding a rubberized elongated element made of carbon fibers (e.g. the second elongated element 21 described with reference to the first embodiment).

### Tenth embodiment

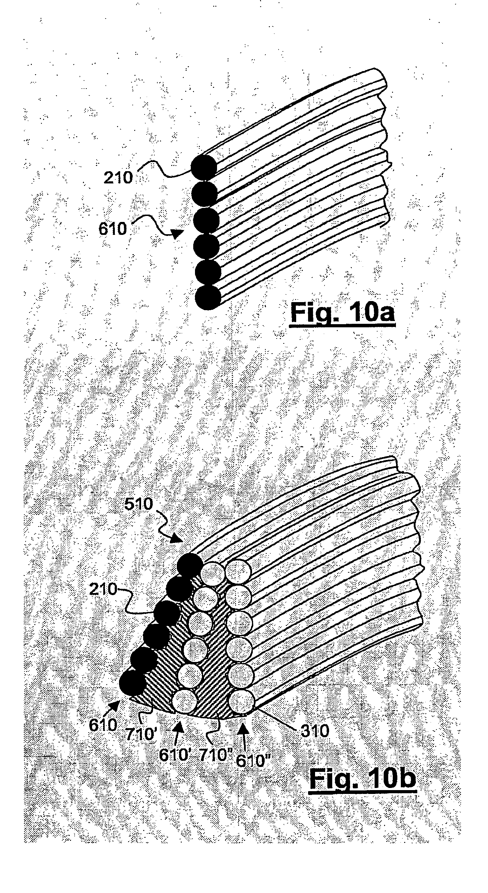

Figures 10a and 10b show, respectively, an annular insert 610 and a bead core 510, said bead core comprising two or more annular inserts 610.

As described with reference to the eighth embodiment above, the bead core 510 is obtained as disclosed, for instance, in document EP-928,680 in the name of the same Applicant.

Bead core 510 comprises three annular inserts 610, 610', 610" and two filling bodies 710, 710' interposed therebetween. Each of the annular inserts 610, 610', 610" is substantially in the form of a circle ring and is located close to a corresponding inner circumferential edge of a tire carcass ply.

According to this embodiment, the annular inserts 610, 610', 610" are made of a single rubberized elongated element which is wound to form a plurality of substantially concentric coils.

According to the preferred embodiment shown in Figure 10b, the annular inserts 610', 610" are made of a metal elongated element 310, while the third annular insert 610 is obtained by spirally winding an elongated element 210 made of carbon fibers. Preferably, the elongated elements 210 and 310 of this embodiment are the same as, and have the same characteristics of, respectively, the elongated elements 21 and 31 of the first embodiment.

Preferably, the annular insert 610 that is obtained by spirally winding the elongated element 210 made of carbon fibers is arranged at the axially inner portion of the bead core 510, i.e. the bead core portion that is close to the inner surface of the tire.

For further description of the invention, some illustrative examples are given below.

### Example 1

A tire (tire A) was manufactured with bead cores similar to those described with reference to the first embodiment of the present invention shown in Figure 1b. In detail, each bead core of tire A was obtained by spirally winding a strip element comprising five elongated elements to produce five radially superimposed layers so as to obtain a 5x5 Alderfer structure.

A tire (tire B), having the same size and the same structure of tire A, was manufactured with conventional bead cores made of steel.

In detail, the characteristics of the bead cores of tire A (invention) and tire B (comparative) are summarized in Table 2 below.

**Table 2**

| | **Tire A (invention)** | **Tire B (comparative)** |
|---|---|---|
| Bead core | Alderfer 5X5 | Alderfer 5X5 |
| Length of the first strip element turn* | 1,464 mm | 1,464 mm |
| Number of metal elongated elements in each strip element | 3 | 5 |
| Number of metal wires in each elongated element | 1 | 1 |
| Metal | steel 0.96 NT | steel 0.96 NT |
| Load at break of each metal elongated element | 1,450 N | 1,450 N |
| Diameter of each metal elongated element | 0.96 mm | 0.96 mm |
| Weight of each metal elongated element | 5.7 g/m | 5.7 g/m |
| Number of elongated elements made of carbon fibers | 2 | - |
| Elongated element made of carbon fibers | 12K Z80** | - |
| Average diameter of the elongated element made of carbon fibers | 1.04 mm | - |
| Weight of the elongated elements made of carbon fibers | 1.1 g/m | - |
| Load at break of the elongateds element made of carbon fibers | 1,080 N | - |
| Weight of the bead core | 141.3 g | 208.6 g |
| Load at break of the bead core | 32.2 kN | 36.3 kN |

| | | |
|---|---|---|
| * corresponds to the circumference length of a drum on which the first turn of the bead core strip element is wound; ** means that the elongated element made of carbon fibers comprises 12,000 carbon fibers; 80 (in tpm - turn per meter) indicates the twist of the filament; Z indicates the sense of the twisting of the filament. | | |

The bead core of the present invention was obtained by using a strip element in which the sequence of the axially adjacent elongated elements was the following: "MCMCM", where "M" was the metal elongated element and "C" was the carbon fiber elongated element.

Table 2 shows that the weight of the bead core according to the present invention is remarkably lower (< 30%) than the weight of a conventional bead core which is made of metal elements only. This aspect is very advantageous since a reduced weight of the tire significantly contributes in reducing the tire rolling resistance. A decrease of the rolling resistance contributes in decreasing the vehicle fuel consumption as well as the heating of the tire structure thereby avoiding, or at least remarkably reducing, the risk of a rapid wear thereof.

Furthermore, Table 2 shows that, nevertheless the overall bead core weight was remarkably reduced, this aspect has not negatively affected the load at break of the bead core of the present invention. In fact, the load at break of the bead core of the present invention was comparable with the load at break of the conventional bead core

### Example 2

The Applicant manufactured tires C, D and E provided with bead cores similar to those described with reference to the first embodiment of the present invention shown in Figure 1b. The characteristics of the bead cores of said tires are listed in Table 3:

**Table 3**

| | **Tire C (invention)** | **Tire D (invention)** | **Tire E (invention)** |
|---|---|---|---|
| Bead core | Alderfer 6X6 | Alderfer 5X5 | Alderfer 6X6 |
| Length of first strip turn* | 1,464 mm | 1,464 mm | 1,464 mm |
| Number of metal elongated elements | 3 | 2 | 2 |
| Metal | steel 0.96 NT | steel 0.96 NT | steel 0.96 NT |
| Load at break of each metal elongated element | 1,450 N | 1,450 N | 1,450 N |
| Diameter of each metal elongated element | 0.96 mm | 0.96 mm | 0.96 mm |
| Weight of each metal elongated element | 5.7 g/m | 5.7 g/m | 5.7 g/m |
| Number of elongated elements made of carbon fibers | 3 | 3 | 4 |
| Elongated element made of carbon fibers | 12K Z80 | 12K Z80 | 12K Z80 |
| Average diameter of the elongated element made of carbon fibers | 1.04 mm | 1.04 mm | 1.04 mm |
| Weight of the elongated element made of carbon fibers | 1.1 g/m | 1.1 g/m | 1.1 g/m |
| Load at break of the elongated element made of carbon fibers | 1,080 N | 1,080 N | 1,080 N |
| Weight of the bead core | 179.2 g | 107.6 g | 115.0 g |
| Load at break of the bead core | 45.5 kN | 30.7 kN | 36.1 kN |

| | | | |
|---|---|---|---|
| * corresponds to the circumference length of a drum on which the first turn of the bead core strip element is arranged. | | | |

Table 3 shows that the weight of the bead core of tire D was about half the weight of the bead core of tire B.

Moreover, Table 3 shows the high values of the load at break of the bead cores of the present invention. In particular, Table 3 shows that the load at break of the bead core of tire C was about 30% higher than the load at break of the bead core of tire B.

### Example 3

Tires A and B, having size 295/30 ZR19, were tested to evaluate, respectively, bead unseating resistance, bead forcing and tire burst properties.

In details, tires A and B were subjected to the bead unseating resistance test according to USA Standard N°109 by Federal Motor Vehicle Safety Standards (Department of Transportation), i.e. FMVSS109 (DOT). The test consists in detecting the axial force which has to be applied to the tire bead so as to cause unseating thereof.

Tires A and B were also subjected to the bead forcing test in order to evaluate the hooping force which is exerted by the tire bead on the wheel rim. The test was carried out by using an apparatus manufactured by Hofmann Balancing Techniques Ltd., Mississauga, Ontario, Canada. The testing equipment was provided with eight sector forcing flanges and with a device for detecting and registering displacements (in two directions X and Y) of the tire bead.

Tires A and B were finally subjected to the tire burst test. The tires, loaded with the nominal operating load and mounted on the respective wheel rim, were progressively inflated with water. The test was stopped when the tire burst or when the tire bead slipped off the rim and the pressure, at which said phenomena occurred, was detected and registered.

The results of the tests are shown in Table 4 where the values are expressed as a percentage with respect to the values of the comparative tire B fixed at 100. Thus, values higher than 100 indicate an improvement with respect to the comparative tire.

**Table 4**

| **Test** | **Tire A (invention)** | **Tire B (comparative)** |
|---|---|---|
| Bead unseating | 105 | 100 |
| Bead forcing | 120 | 100 |
| Tire burst | 100 | 100 |

The data reported in Table 4 show that tire A of the present invention is remarkably better than conventional tire B as far as bead forcing is concerned. In fact, the hooping force exerted by the bead of tire A is about 20% higher than that exerted by the bead of tire B.

Moreover, Table 4 shows that tire A of the present invention has an improved bead unseating resistance with respect to conventional tire B.

Finally, Table 4 shows also that, notwithstanding the improvement of bead forcing and bead unseating as well as the weight decrease of the bead of the tire A of the present invention, the burst properties of tire A of the present invention are comparable with those of conventional tire B.

## Claims

1. A tire (TI) for a motor vehicle, said tire comprising:
- a carcass structure (S) comprising at least one carcass ply (CP), said carcass structure comprising a crown portion and two axially opposite side portions terminating in beads (B) for mounting the tire on a rim (R);
- a tread band (TB), and
- a belt structure (7) interposed between said carcass structure (CS) and said tread band (TB),
wherein each bead (B) includes a bead core (BC), said bead core comprising:
- at least one first elongated element (31) comprising at least one metal wire, and
- at least one second elongated element (21) comprising at least one carbon fiber.

2. The tire according to claim 1, wherein said at least one first elongated element (31) is adjacent to said at least one second elongated element (21).

3. The tire according to claim 1, wherein said at least one first elongated element (31) is axially adjacent to said at least one second elongated element (21).

4. The tire according to claim 3, wherein it comprises at least one first series of one first elongated element (31) and at least one second series of one second elongated element (21).

5. The tire according to claim 4, wherein said at least one second series is arranged at one portion of the bead core (BC).

6. The tire according to claim 5, wherein one second series is arranged at the portion of the bead core (BC) substantially faced towards a flange of a rim (R) when the tire is mounted thereon.

7. The tire according to claim 6, wherein one further second series is arranged at the portion of the bead core (BC) which is opposed to the portion faced towards the rim flange when the tire is mounted thereon.

8. The tire according to any of claims 4 to 7, wherein said at least one first series is axially adjacent to said at least one second series in an alternate configuration.

9. The tire according to claim 4 wherein one first series is arranged at the portion of the bead core (BC) substantially faced towards a flange of a rim when the tire is mounted thereon.

10. The tire according to claim 9, wherein a further first series is arranged at the portion of the bead core (BC) which is opposed to the portion faced towards the rim flange when the tire is mounted thereon.

11. The tire according to claim 1, wherein said at least one first elongated element (31) is radially adjacent to said at least one second elongated element (21).

12. The tire according to claim 11, wherein it comprises at least one first series of a first elongated element (31) and at least one second series of a second elongated element (21), said at least one first series being radially adjacent to a corresponding second series.

13. The tire according to any of claims 1 to 12, wherein said at least one first elongated element (31) comprises at least two stranded metal wires (26s).

14. The tire according to any of claims 1 to 13, wherein said at least one metal wire (26s) is stranded around said at least one second elongated element (26c) and forms a stranded cord (26).

15. The tire according to claim 14, wherein said stranded cord (26) is radially spirally wound and forms an annular insert.

16. The tire according to claim 14, wherein said stranded cord (26) is radially spirally wound together with one first elongated element (31) and forms an annular insert.

17. The tire according to any of claims 1 to 13, wherein said at least one second elongated element (21) is stranded around said at least one first elongated element (31) and forms a stranded cord.

18. The tire according to claim 17, wherein said stranded cord is radially spirally wound and forms an annular insert.

19. The tire according to claim 17, wherein said stranded cord is radially spirally wound together with one first elongated element in order to form an annular insert.

20. The tire according to any of claims 15, 16, 18, 19, wherein the bead core further comprises a filling body (46) arranged between two annular inserts.

21. The tire according to claim 1, wherein one first elongated element (31) is radially spirally wound in order to form an annular insert and one second elongated element (21) is radially spirally wound in order to form a further annular insert, and wherein a filling body (42) is provided between said annular insert and said further annular insert.

22. The tire according to any of preceding claims, wherein said at least one second elongated element (21) comprises at least one carbon fiber which has been dipped into a thermosetting resin.

23. The tire according to claim 22, wherein said thermosetting resin comprises resorcinol-formaldehyde resin.

24. The tire according to any of preceding claims, wherein said at least one second elongated element (21) comprises at least one carbon fiber cord having an ultimate tensile strain at failure comprised from about 1.6% and 2.3%.

25. The tire according to any of preceding claims, wherein a ratio between an amount of metal material and an amount of carbon fibers present in the bead core is from about 20% to about 80%.

26. The tire according to claim 25, wherein the ratio between the amount of metal material and the amount of carbon fibers present in the bead core is from about 40% to about 60%.

## Patentansprüche

1. Reifen (T1) für ein Motorfahrzeug, wobei der Reifen aufweist:
eine Karkassenstruktur (CS), die wenigstens eine Karkassenlage (CP) aufweist, wobei die Karkassenstruktur einen Kronenabschnitt und zwei axial gegenüberliegende Seitenabschnitte aufweist, die an Wulsträndern (B) zum Aufziehen des Reifens auf eine Felge (R) enden;
ein Laufflächenband (TB), und
eine Gürtelstruktur, die zwischen der Karkassenstruktur (CS) und dem Laufflächenband (TB) vorgesehen ist,
wobei jeder Wulstrand (B) einen Wulstrandkern (Bd) enthält, wobei der Wulstrandkern aufweist:
wenigstens ein erstes längliches Element (31), das wenigstens einen Metalldraht aufweist, und
wenigstens ein zweites längliches Element (21), das wenigstens eine Kohlenstofffaser aufweist.

2. Reifen nach Anspruch 1, bei dem das wenigstens eine erste längliche Element (31) benachbart zu dem wenigstens einen zweiten länglichen Element (21) ist.

3. Reifen nach Anspruch 1, bei dem das wenigstens eine erste längliche Element (31) axial benachbart zu dem wenigstens einen zweiten länglichen Element (21) ist.

4. Reifen nach Anspruch 3, bei dem dieser wenigstens eine erste Reihe eines ersten länglichen Elements (31) und wenigstens eine zweite Reihe eines zweiten länglichen Elements (21) aufweist.

5. Reifen nach Anspruch 4, bei dem die wenigstens eine zweite Reihe an einem Abschnitt des Wulstrandkerns (BC) angeordnet ist.

6. Reifen nach Anspruch 5, bei dem eine zweite Reihe an dem Abschnitt des Wulstrandkerns (BC) angeordnet ist, der im Wesentlichen einem Flansch einer Felge (R) zugewandt ist, wenn der Reifen auf diese aufgezogen ist.

7. Reifen nach Anspruch 6, bei dem eine weitere zweite Reihe an dem Abschnitt des Wulstrandkerns (BC) angeordnet ist, der dem Abschnitt gegenüberliegt, der dem Felgenflansch zugewandt ist, wenn der Reifen auf diese aufgezogen ist.

8. Reifen nach einem der Ansprüche 1 bis 4, bei dem die wenigstens eine erste Reihe zu der wenigstens einen zweiten Reihe auf abwechselnde Weise axial benachbart ist.

9. Reifen nach Anspruch 4, bei dem eine erste Reihe an einem Abschnitt des Wulstrandkerns (BC) angeordnet ist, der im Wesentlichen einem Flansch einer Felge zugewandt ist, wenn der Reifen auf diese aufgezogen ist.

10. Reifen nach Anspruch 9, bei dem eine weitere erste Reihe an dem Abschnitt des Wulstrandkerns (BC) angeordnet ist, der dem Abschnitt gegenüberliegt, der dem Felgenflansch zugewandt ist, wenn der Reifen auf diese aufgezogen ist.

11. Reifen nach Anspruch 1, bei dem das wenigstens eine erste längliche Element (31) zu dem wenigstens einen zweiten länglichen Element (21) radial benachbart ist.

12. Reifen nach Anspruch 11, bei dem dieser wenigstens eine erste Reihe eines ersten länglichen Elements (31) und wenigstens eine zweite Reihe eines zweiten länglichen Elements (21) aufweist, wobei die wenigstens eine erste Reihe zu einer entsprechenden zweiten Reihe radial benachbart ist.

13. Reifen nach einem der Ansprüche 1 bis 12, bei dem das wenigstens eine erste längliche Element (31) wenigstens zwei verseilte Metalldrähte (26s) aufweist.

14. Reifen nach einem der Ansprüche 1 bis 13, bei dem der wenigstens eine Metalldraht (26s) um das wenigstens eine zweite längliche Element (26c) verseilt ist und einen verseilten Kord (26) ausbildet.

15. Reifen nach Anspruch 14, bei dem der verseilte Kord (26) radial spiralförmig gewickelt ist und eine ringförmige Einlage ausbildet.

16. Reifen nach Anspruch 14, bei dem der verseilte Kord (26) mit einem ersten länglichen Element (31) radial spiralförmig gewickelt ist und eine ringförmige Einlage ausbildet.

17. Reifen nach einem der Ansprüche 1 bis 13, bei dem das wenigstens eine zweite längliche Element (21) um das wenigstens eine erste längliche Element (31) verseilt ist und einen verseilten Kord ausbildet.

18. Reifen nach Anspruch 17, bei dem der verseilte Kord radial spiralförmig gewickelt ist und eine ringförmige Einlage ausbildet.

19. Reifen nach Anspruch 17, bei dem der verseilte Kord zusammen mit einem ersten länglichen Kord radial spiralförmig gewickelt ist, um eine ringförmige Einlage auszubilden.

20. Reifen nach einem der Ansprüche 15, 16, 18, 19, wobei der Wulstrandkern ferner einen Füllkörper (46) aufweist, der zwischen zwei ringförmigen Einlagen vorgesehen ist.

21. Reifen nach Anspruch 1, bei dem ein erstes längliches Element (31) radial spiralförmig gewickelt ist, um eine ringförmige Einlage auszubilden, und ein zweites längliches Element (21) radial spiralförmig gewickelt ist, um eine weitere ringförmige Einlage auszubilden, und wobei ein Füllkörper (42) zwischen der ringförmigen Einlage und der weiteren ringförmigen Einlage vorgesehen ist.

22. Reifen nach einem der vorhergehenden Ansprüche, bei dem das wenigstens eine zweite längliche Element (21) wenigstens eine Kohlenstofffaser aufweist, die in ein heißhärtendes Harz eingetaucht wurde.

23. Reifen nach Anspruch 22, bei dem das heißhärtende Harz Resorcinharz aufweist.

24. Reifen nach einem der vorhergehenden Ansprüche, bei dem das wenigstens zweite längliche Element (21) wenigstens einen Kohlenstofffaserkord aufweist, der eine höchste Bruch-Zugdehnung aufweist, die zwischen ungefähr 1,6% und 2,3% liegt.

25. Reifen nach einem der vorhergehenden Ansprüche, bei dem ein Verhältnis zwischen einem Betrag von Metallmaterial und einem Betrag von Kohlenstofffasern, die in dem Wulstrandkern vorhanden sind, zwischen ungefähr 20% und ungefähr 80% liegt.

26. Reifen nach Anspruch 25, bei dem das Verhältnis zwischen dem Betrag von Metallmaterial und dem Betrag von Kohlenstofffasern, die in dem Wulstrandkern vorhanden sind, zwischen ungefähr 40% bis ungefähr 60% liegt.

## Revendications

1. Pneu (TI) pour un véhicule à moteur, ledit pneu comportant:
- une structure de carcasse (CS) comportant au moins une nappe de carcasse (CP), ladite structure de carcasse comportant une partie de couronne et deux parties latérales axialement opposées se terminant par des talons (B) pour le montage du pneu sur une jante (R);
- une bande de roulement (TB), et
- une structure de ceinture interposée entre ladite structure de carcasse (CS) et de ladite bande de roulement (TB),
dans lequel chaque talon (B) comprend une âme de talon (BC), ladite âme de talon comportant:
- au moins un premier élément allongé (31) comportant au moins un fil métallique, et
- au moins un deuxième élément allongé (21) comportant au moins une fibre de carbone.

2. Pneu selon la revendication 1, dans lequel ledit au moins un premier élément allongé (31) est adjacent audit au moins un deuxième élément allongé (21).

3. Pneu selon la revendication 1, dans lequel ledit au moins un premier élément allongé (31) est axialement adjacent audit au moins un deuxième élément allongé (21).

4. Pneu selon la revendication 3, dans lequel il comprend au moins un premier ensemble d'un premier élément allongé (31) et au moins un deuxième ensemble d'un deuxième élément allongé (21).

5. Pneu selon la revendication 4, dans lequel ladite au moins un deuxième ensemble est disposée dans une partie de l'âme de talon (BC).

6. Pneu selon la revendication 5, dans lequel un deuxième ensemble est disposé dans la partie de l'âme de talon (BC) sensiblement orientée vers un rebord d'une jante (R) lorsque le pneu est monté dessus.

7. Pneu selon la revendication 6, dans lequel un deuxième ensemble supplémentaire est disposé dans la partie de l'âme de talon (BC) qui est opposée à la partie orientée vers le rebord de la jante (R) lorsque le pneu est monté dessus.

8. Pneu selon l'une quelconque des revendications 4 à 7, dans lequel ledit au moins un premier ensemble est axialement adjacent audit au moins un deuxième ensemble dans une configuration alternée.

9. Pneu selon la revendication 4, dans lequel un premier ensemble est disposé dans la partie de l'âme de talon (BC) sensiblement orientée vers un rebord d'une jante (R) lorsque le pneu est monté dessus.

10. Pneu selon la revendication 9, dans lequel un premier ensemble supplémentaire est disposé dans la partie de l'âme de talon (BC) qui est opposée à la partie orientée vers le rebord de la jante lorsque le pneu est monté dessus.

11. Pneu selon la revendication 1, dans lequel ledit au moins un premier élément allongé (31) est radialement adjacent audit au moins un deuxième élément allongé (21).

12. Pneu selon la revendication 11, dans lequel il comprend au moins un premier ensemble d'un premier élément allongé (31) et au moins un deuxième ensemble d'un deuxième élément allongé (21), ledit au moins un premier ensemble étant radialement adjacent à un deuxième ensemble correspondant.

13. Pneu selon l'une quelconque des revendications 1 à 12, dans lequel ledit au moins un premier élément allongé (31) comporte au moins deux fils métalliques toronnés (265).

14. Pneu selon l'une quelconque des revendications 1 à 13, dans lequel ledit au moins un fil métallique (265) est toronné autour dudit au moins un deuxième élément allongé (262) et forme une corde toronnée (26).

15. Pneu selon la revendication 14, dans lequel ladite corde toronnée (26) est radialement enroulée en spirale et forme un insert annulaire.

16. Pneu selon la revendication 14, dans lequel ladite corde toronnée (26) est radialement enroulée en spirale avec un premier élément allongé (31) et forme un insert annulaire.

17. Pneu selon l'une quelconque des revendications 1 à 13, dans lequel ledit au moins un deuxième élément allongé (21) est toronné autour dudit au moins un premier élément allongé (31) et forme une corde toronnée.

18. Pneu selon la revendication 17, dans lequel que ladite corde toronnée est radialement enroulée en spirale et forme un insert annulaire.

19. Pneu selon la revendication 17, dans lequel que ladite corde toronnée est radialement enroulée en spirale avec un premier élément allongé afin de former un insert annulaire.

20. Pneu selon l'une quelconque des revendications 15, 16, 18, 19, dans lequel l'âme de talon (BC) comporte en outre un corps de remplissage (46) disposé entre deux inserts annulaires.

21. Pneu selon la revendication 1, dans lequel un premier élément allongé (31) est radialement enroulé en spirale afin de former un insert annulaire et un deuxième élément allongé (21) est radialement enroulé en spirale afin de former un insert annulaire supplémentaire, et dans lequel un corps de remplissage (42) est prévu entre ledit insert annulaire et ledit insert annulaire supplémentaire.

22. Pneu selon l'une quelconque des revendications précédentes, dans lequel ledit au moins un deuxième élément allongé (21) comporte au moins une fibre de carbone qui a été plongée dans une résine thermodurcissable.

23. Pneu selon la revendication 22, dans lequel ladite résine thermodurcissable comprend une résine résorcinol-formaldéhyde.

24. Pneu selon l'une quelconque des revendications précédentes, dans lequel ledit au moins un deuxième élément allongé (21) comporte au moins une corde en fibre de carbone ayant un allongement à la rupture en traction compris entre environ 1,6% et 2,3%.

25. Pneu selon l'une quelconque des revendications précédentes, dans lequel un rapport entre une quantité de matériau métallique et une quantité de fibres de carbone présents dans l'âme de talon est d'environ 20% à environ 80%.

26. Pneu selon la revendication 25, dans lequel le rapport entre la quantité de matériau métallique et la quantité de fibres de carbone présents dans le noyau de talon est d'environ 40% à environ 60%.
